# EUROPÄISCHE PATENTANMELDUNG

(11) **EP 2 226 177 A2**
(43) Veröffentlichungstag der Anmeldung: **08.09.2010**
(21) Anmeldenummer: 10163970.6
(22) Anmeldetag: 28.11.2006
(51) Int. Cl.: B29C 45/73, B23P 15/00, B23H 9/14, B23H 9/00, B23H 9/16, B29C 45/33, B29C 33/04

(54) **Verbesserte Halsbackenkühlung**

(30) Priorität: 01.02.2006 DE 102006004928
(62) Teilanmeldung aus: 06830154.8
(71) Anmelder: MHT Mold & Hotrunner Technology AG, 65239 Hochheim (DE)
(72) Erfinder: Wegmann, Klaus, 55218 Ingelheim (DE); Hönisch, Marek, Hünstetten 65510 (DE); Neter, Witold, Newnan, GA 30265 (US); Schweininger, Stefan, 65197 Wiesbaden (DE); Wagner, Christian, 55126 Mainz (DE)
(74) Vertreter: WSL Patentanwälte

(57) **Zusammenfassung**

Die vorliegende Erfindung betrifft eine Halsbacke eines Formwerkzeuges zur Herstellung eines Hohlkörperformlings mittels Spritzgießen, wobei die Halsbacke einen Grundkörper mit einer formgebenden Oberfläche, die der Außenkontur eines Halsabschnittes des herzustellenden Hohlkörperformlings angepasst ist und dafür vorgesehen ist, beim Spritzgießvorgang mit dem Halsabschnitt des Hohlkörperformlings in Kontakt zu treten, aufweist, wobei weiterhin zumindest ein Kühlkanal für ein Kühlfluid, der zumindest abschnittsweise im wesentlichen parallel zur formgebenden Oberfläche verläuft, ein Einlass und ein Auslass sowie ein Einlasskanal und ein Auslasskanal, die den Einlass bzw. den Auslass mit dem Kühlkanal verbinden, vorgesehen sind, wobei ein zumindest teilweise gekrümmter Abschnitt des Kühlkanals mit Hilfe eines Funkenerosionsverfahren hergestellt wird.

## Beschreibung

Die vorliegende Erfindung betrifft eine Halsbacke eines Formwerkzeuges zur Herstellung eines Hohlkörperformlings mittels Spritzgießen, wobei die Halsbacke einen Grundkörper mit einer formgebenden Oberfläche aufweist, die der Außenkontur eines Halsabschnitts des herzustellenden Hohlkörperformlings angepasst ist und dafür vorgesehen ist, beim Spritzgießvorgang mit dem Halsabschnitt des Hohlkörperformlings in Kontakt zu treten, wobei weiterhin zumindest ein Kühlkanal für ein Kühlfluid, der zumindest abschnittsweise im wesentlichen parallel zur formgebenden Oberfläche verläuft, ein Einlass und ein Auslass sowie ein Einlasskanal und ein Auslasskanal, die den Einlass bzw. den Auslass mit dem Kühlkanal verbinden, vorgesehen sind, wobei der Kühlkanal näher an der formgebenden Oberfläche angeordnet ist als der Einlass und der Auslass.

Beim Spritzgießen wird der Werkstoff plastifiziert und dann unter hohem Druck in ein Spritzgießwerkzeug eingespritzt. Der Werkstoff verbleibt im Werkzeug bis er in einen festen, entformbaren Zustand übergeht. Das Spritzgießwerkzeug bildet hierzu einen im wesentlichen geschlossenen Raum aus, dessen Kontur der vorgesehen Außenkontur des zu fertigenden Gussteils entspricht.

Bei der Herstellung von PET-Flaschen werden zunächst mittels Spritzgießen entsprechende Hohlkörperformlinge hergestellt, die erst in einem weiteren Verfahrensschritt in die endgültige Flaschenform aufgeblasen werden. Die mittels Spritzgießen hergestellten Hohlkörperformlinge für PET-Flaschen werden auch als Vorformlinge oder Preforms bezeichnet. Der im Spritzgießwerkzeug zu fertigende Vorformling weist im Bereich des späteren Flaschenhalses ein Gewinde sowie in der Regel einen Halsring auf. Sowohl das Gewinde als auch der Halsring bilden im formgebenden Werkzeug Hinterschneidungen, so dass das Spritzgießwerkzeug zumindest in diesem Bereich mehrteilig ausgestaltet sein muss, um eine Entformung des Vorformlings zu ermöglichen. Das die Außenkontur des Flaschengewindes sowie des Halsrings bildende Spritzgießwerkzeugteil ist im allgemeinen zweiteilig ausgeführt, wobei jedes der zwei Teile als Halsbacke bezeichnet wird und jeder Teil einen 180°-Umfangsabschnitt des Gewindes darstellt.

Generell ist es beim Spritzgießen erwünscht, die entsprechenden Wandstärken der Formlinge zu verringern. Dies hat neben der Material- und Gewichtsersparnis den zusätzlichen Vorteil, dass die Zykluszeit, d.h. die Zeit, über welche sich der Formling im Formnest des Werkzeugs befindet, um in einen Zustand überzugehen, in dem der Formling ohne Deformationen aus dem Werkzeug entnehmbar ist, verringert wird. Formlinge mit geringerer Wandstärke gehen schneller in einen formstabilen Zustand über.

Die Entwicklung hin zu immer dünneren Wandstärken ist mittlerweile so weit fortgeschritten, dass bei Vorformlingen der Bereich des Gewindes und des Halsrings die größte Wandstärke aufweist und die Abkühlung dieses Bereichs des Vorformlings der die Zykluszeit bestimmende Faktor ist. Aufgrund der Gewindeausbildung bedarf es einer erhöhten Wartezeit, bis auch im Bereich des Gewindes bzw. des Halsrings der plastifizierte Werkstoff überall in einen entnehmbaren Zustand übergegangen ist.

Um die Zykluszeiten beim Spritzgießen von Vorformlingen zu verkürzen, ist es daher bereits üblich, in die Halsbacken zwei miteinander verbundene Kühlbohrungen einzubringen, durch die ein Kühlfluid, meistens Wasser, zu- bzw. abgeführt wird. Zu diesem Zweck werden die Kühlbohrungen im wesentlichen V-förmig ausgebildet. D.h. es wird zunächst eine Kühlsackbohrung in das Spritzgießwerkzeugteil eingebracht und dann eine zweite mit einer zu der ersten Bohrungsachse geneigten Bohrungsachse eingebracht, wobei sich die beiden Bohrungen im Werkzeugkörper treffen, so dass durch die eine Kühlbohrung Kühlfluid in den Werkzeugkörper eingebracht werden kann, das dann durch die erste Kühlbohrung in die zweite fließt und über die zweite Kühlbohrung den Werkzeugkörper wieder verlassen kann. Bei diesen Ausführungsformen kann das Kühlmittel jedoch nur sehr punktuell eingebracht werden. Dies führt nur zu geringen Kühlleistungen in den Halsbacken und darüber hinaus zu einer ungleichmäßigen Wärmeabfuhr. Darüber hinaus führt auch die inhomogene Abkühlung des Formlings zu Problemen bei der Formstabilität des Formlings selbst.

Vereinzelt werden daher bereits zusätzliche Bohrungen in das Werkzeugteil eingebracht, die ebenfalls in den Kühlbohrungen oder in unmittelbarer Nähe davon enden, wobei in diese zusätzlichen Bohrungen sogenannte Kühlstifte eingesetzt werden, die beispielsweise aus Silber hergestellt sind und eine gegenüber dem Material des Werkzeugs erhöhte Wärmeleitfähigkeit aufweisen, so dass die Wärme auch über die Kühlstifte zu dem Kühlkanal transportiert werden kann.

Abgesehen davon, dass das Vorsehen von Kühlstiften zu erhöhten Kosten bei der Herstellung des Spritzgießwerkzeugs führt, ist die Wärmeverteilung innerhalb des Werkzeuges auch bei diesen Ausführungsformen nicht optimal.

Die Patentschrift US 5,930,882 offenbart einen Kühlkanal für eine Halsbacke, wobei die Halsbacke zweistückig ausgeführt ist. Sie weist ein radial außenliegendes maschinenbearbeitetes Teil sowie ein radial innenliegendes, die formgebende Oberfläche bildendes Gussteil auf. Dabei sind am Außenumfang des Gussteils, d.h. an seiner der formgebenden Oberfläche abgewandten Seite Ausnehmungen als Kühlkanäle vorgesehen. Diese werden mit dem radial außenliegenden Teil der Halsbacke gegen die Umgebung abgedichtet, wobei im radial außenliegenden Teil der Halsbacke auch der Zulauf und der Ablauf für das Kühlfluid angeordnet ist. Dabei erweist es sich jedoch als nachteilig, dass das radial innen liegende Teil als Gussteil vorgesehen ist, da für die Herstellung von Halsbacken für unterschiedliche Formen von Formlingen jeweils eine Urform für das Giessen des Gussteils benötigt wird. Solche Gießformen sind jedoch teuer in der Herstellung. Darüber hinaus wirkt sich die zweiteilige Ausführung des Grundkörpers der Halsbacke nachteilig auf die Stabilität der Halsbacke aus. Brüche entlang der Verbindung zwischen dem radial innenliegenden und dem radial außenliegenden Teil sind wahrscheinlich.

Ausgehend von diesem Stand der Technik ist es daher Aufgabe der Erfindung, eine Halsbacke bereitzustellen, welche einfach und daher kostengünstig herzustellen ist, und eine effektive und homogene Kühlung insbesondere in der Nähe der formgebenden Oberfläche der Halsbacke erlaubt.

Erfindungsgemäß wird diese Aufgabe durch eine Halsbacke mit allen Merkmalen von Anspruch 1 gelöst.

Auf diese Weise können Kühlkanäle gebildet werden, welche sich im wesentlichen entlang der gesamten formgebenden Oberfläche erstrecken, wobei auch komplexe Verläufe des Kühlkanals realisierbar sind.

Durch die Kombination von mindestens zwei sich einander anschließenden Abschnitten des Kühlkanals, wobei einer dieser Abschnitte vollständig aus dem Grundkörper ausgenommen ist, so dass seine Wände ausschließlich von dem Grundkörper gebildet werden und der zweite sich an diesen ersten Abschnitt anschließende Verbindungsabschnitt Wände aufweist, die teilweise durch den Grundkörper und teilweise durch ein auf den Grundkörper aufgesetztes Verschlusselement gebildet werden, ist es möglich, konturnah, d.h. im wesentlichen in der Nähe der formgebenden Oberfläche angeordnete Abschnitte des Kühlkanals herzustellen, die vollständig innerhalb des einstückig ausgebildeten Grundkörpers liegen. Dabei werden die Wände der vollständig im Grundkörper liegenden Abschnitte des Kühlkanals ausschließlich vom Grundkörper gebildet, so dass diese Abschnitte die Stabilität des Grundköpers nicht schwächen. Die an diese Abschnitte anschließenden Abschnitte, deren Wände nur teilweise durch den Grundkörper gebildet werden, ermöglichen das Einbringen der vollständig von dem Grundkörper ausgenommenen Abschnitte mit einem Werkzeug. Diese Abschnitte werden nach der Herstellung mit Hilfe des aufgesetzten Verschlusselements verschlossen.

Die Grundformen der formgebenden Oberfläche der Halsbacke sind im wesentlichen durch die Rotationssymmetrie des Flaschenhalses der herzustellenden Vorformlinge vorgegeben. Abweichungen von der reinen Zylinder- oder Kegelstumpfform ergeben sich durch das Gewinde, welches durch seine Steigung die vollständige Rotationssymmetrie bricht. Daher müssen die beiden Halsbacken eines Werkzeugs so ausgestaltet sein, dass sie die komplementären Hälften des Gewindes in ihrer Form wiedergeben.

Ein im wesentlichen paralleler Verlauf des Kühlkanals zur formgebenden Oberfläche im Sinne dieser Anmeldung ist ein solcher Verlauf, bei dem der Kühlkanal der Kontur der formgebenden Oberfläche innerhalb des Grundkörpers folgt oder dem Verlauf der formgebenden Oberfläche angenähert ist. Dabei können beispielsweise hintereinander angeordnete, gerade, zueinander nicht kollineare Abschnitte den Formverlauf der formgebenden Oberfläche approximieren und ein derart gebildeter Kühlkanal ist im wesentlichen parallel zur formgebenden Oberfläche.

Dabei ist es zweckmäßig, wenn die formgebende Oberfläche aus Abschnitten besteht, die im wesentlichen die Form des Mantels eines Teilzylinders oder die Form des Mantels eines Teilkegelstumpfes haben, wobei vorzugsweise die Achsen der teilzylinderförmigen Abschnitte und die Achsen der teilkegelstumpfförmigen Abschnitte auf einer Achse, der sogenannten Halsbackenachse liegen.

Bevorzugt ist eine Ausführungsform der Erfindung, bei welcher der Kühlkanal zumindest abschnittsweise eine Verzweigung aufweist, so dass für das Kühlfluid beim Durchströmen der Halsbacke vom Einlass zum Auslass zumindest zwei unterschiedliche Strömungspfade gebildet werden. Auf diese Weise lässt sich eine parallele Durchströmung verschiedener Abschnitte des Kühlkanals erreichen, wodurch eine sehr homogene Kühlwirkung erzielt wird, da viele Bereiche der Halsbacke im wesentlichen gleichzeitig mit Kühlfluid der Ausgangstemperatur, mit welcher das Fluid in den Kühlkanal einströmt, beaufschlagt werden. Darüber hinaus wird auf diese Weise die Durchflussmenge durch den Kühlkanal erhöht und eine Redundanz bei Verstopfung eines Strömungspfades erzielt.

Besonders bevorzugt ist eine Ausführungsform der Erfindung, bei welcher der Kühlkanal mehrere sich aneinander anschließende im wesentlichen gerade Abschnitte aufweist, wobei zwischen zwei Abschnitten Verbindungsstellen gebildet sind und wobei die Kanalachsen von je zwei sich aneinander anschließenden Abschnitten nicht kollinear zueinander angeordnet sind.

Auf diese Weise ist mit Hilfe einfacher Durchgangs- oder Sackbohrung ein Kühlkanal realisierbar, der eine effiziente und homogene Kühlung der gesamten formgebenden Oberfläche der Halsbacke ermöglicht. Dazu werden die Bohrungen derart unter einem Winkel zueinander in den Grundkörper eingebracht, dass je zwei aneinander anschließende Bohrungen sich überschneidende Bereiche aufweisen, welche die Verbindungsstellen zwischen den einzelnen Abschnitten bilden. Dabei haben Sackbohrungen den Vorteil, dass die zunächst geschlossenen Enden der Bohrungen durch die Überschneidung mit der benachbarten Bohrung bereits eine Fluidverbindung zu dieser bereitstellen, wobei die Fluidverbindung vollständigen von Wänden des Grundkörpers umgeben ist. Die offenen Enden bilden ebenfalls im Überschneidungsbereich Verbindungsstellen für eine Fluidverbindung zwischen den benachbarten Abschnitten. Die offenen Enden der Sackbohrung müssen jedoch, um einen Fluidstrom von einem zum nächsten Abschnitt zu ermöglichen, mit Hilfe eines Verschlusselements geschlossen werden.

Dabei ist es zweckmäßig, wenn die Kanalachsen von je zwei sich aneinander anschließenden Abschnitten einen Winkel zwischen 15 deg. und 155 , vorzugsweise zwischen 30 deg. und 100 deg. und besonders bevorzugt zwischen 40 deg. und 70 deg. einschließen.

Vorteilhaft ist es darüber hinaus, wenn zumindest ein Teil der Abschnitte des Kühlkanals gegenüber der Halsbackenachse geneigt angeordnet sind. Auf diese Weise kann der Kontur der formgebenden Oberfläche auch in der axialen Richtung der Halsbacke gefolgt werden. Darüber hinaus lässt sich durch den gegenüber der Halsbackenachse geneigten Verlauf eine weitere Annäherung des Kühlkanals an die formgebende Oberfläche und damit eine effizientere Kühlung erreichen.

Bevorzugt ist eine Ausführungsform der Erfindung, bei welcher jede zweite Verbindungsstelle zwischen zwei sich aneinander anschließenden Abschnitten einen Verbindungsabschnitt des Kühlkanals bildet, dessen Kanalwand zumindest teilweise von dem Verschlusselement gebildet wird.

Besonders bevorzugt ist eine Ausführungsform der Erfindung, bei welcher der Kühlkanal eine Mehrzahl von sich aneinander anschließenden Abschnitten aufweist, wobei jeder zweite der Mehrzahl von sich aneinander anschließenden Abschnitten ein Horizontalabschnitt ist, der im wesentlichen senkrecht zu der Halsbackenachse angeordnet ist, und immer ein Horizontalabschnitt über einen Vertikalabschnitt, der mit einem Winkel von weniger als 60 , vorzugsweise zwischen 30 deg. und 45 deg. und besonders bevorzugt zwischen 35 deg. und 40 deg. gegenüber der Halsbakkenachse geneigt ist, mit einem weiteren Horizontalabschnitt verbunden ist.

Dabei ist es zweckmäßig, wenn die Kanalwände zumindest jedes vierten, vorzugsweise jedes zweiten der Mehrzahl von sich aneinander anschließenden Abschnitten teilweise von dem Verschlusselement gebildet werden. Auf diese Weise kann ein Kühlkanal ausgebildet werden, bei welchem die Kühlleistung des Fluids in axialer Richtung effizient über den Grundkörper der Halsbacke bzw. die formgebende Oberfläche verteilt wird.

Vorteilhaft ist eine Ausführungsform der Erfindung, bei welcher der Kühlkanal zumindest abschnittsweise alternierend Horizontalabschnitte und Vertikalabschnitte aufweist, die derart angeordnet sind, dass das Fluid vom Kühlkanal zumindest abschnittsweise mäanderförmig geführt ist.

Besonders bevorzugt ist eine Ausführungsform der Erfindung, bei welcher der Kühlkanal genau zwei Horizontalabschnitte und mindestens zwei, vorzugsweise mindestens vier, die Horizontalabschnitte verbindende Vertikalabschnitte, die derart angeordnet sind, dass das durch den Einlass in die Halsbacke eintretende Fluid zu dem ersten der Horizontalabschnitte, von diesem über die zumindest zwei Vertikalabschnitte zu dem zweiten Horizontalbschnitt und weiter zum Auslasskanal und zum Auslass geleitet wird. Ein derart ausgestalteter Kühlkanal ermöglicht die parallele Durchströmung des Grundkörpers über den gesamten Umfangsbereich der formgebenden Oberfläche in nahezu der gesamten axialen Ausdehnung der formgebenden Oberfläche.

Bei den zuvor genannten Ausführungsformen ist es zweckmäßig, wenn die Vertikalabschnitte in Form von Bohrungen in den Grundkörper der Halsbacke eingebracht sind während die Horizontalabschnitte als Einfräsungen auf der Ober- bzw. Unterseite des Grundkörpers vorgesehen sind, so dass sie die einzelnen Vertikalabschnitte in der vorgeschlagenen Art und Weise miteinander verbinden. Um eine Führung des Fluids in den eingefrästen Ausnehmungen an der Ober- bzw. Unterseite des Grundkörpers zu ermöglichen, werden die Horizontalabschnitte des Kühlkanals mit Hilfe eines oder mehrerer Verschlusselemente abgedeckt.

In einer weiteren besonders bevorzugten Ausführungsform der Erfindung weist der Grundkörper eine der formgebenden Oberfläche abgewandte Fläche, die konisch ausgebildet ist, auf, wobei die konische Fläche dafür vorgesehen ist, mit einem anderen Bauteil des Spritzgießwerkzeuges während des Spritzgießvorgangs in Kontakt zu treten.

Eine solche konische Fläche auf der der formgebenden Oberfläche abgewandten Seite des Grundkörpers ermöglicht es, die von der Schließeinheit in Richtung der Halsbackenachse ausgeübten Kräfte in radialer Richtung umzuleiten, um die gegenüberliegenden komplementären Halsbackenelemente einer Spritzgießform während des Spritzgießvorgangs zusammenzudrücken und die Werkzeugform abzudichten.

Die Halsbacke hat somit einen im wesentlichen T-förmigen Querschnitt, wobei die formgebende Fläche den Querbalken der T-Form begrenzt und der Fuß der T-Form von einem sich von der formgebenden Fläche erstreckenden Befestigungsabschnitt gebildet wird. Mit anderen Worten hat die Halsbacke einen Abschnitt mit größerer axialer Ausdehnung, der von den konischen Flächen und der formgebenden Fläche gebildet wird und einen sich in etwa mittig daran anschließenden Befestigungsabschnitt mit geringerer axialen Ausdehnung.

Zur Erzielung einer effizienten und homogenen Kühlleistung ist es besonders zweckmäßig, wenn der Kühlkanal im wesentlichen in dem Abschnitt mit größerer axialer Ausdehnung angeordnet ist. Der Bereich mit größerer axialer Ausdehnung wird durch die ihn begrenzende formgebende Oberfläche am stärksten erwärmt. Daher ist es zweckmäßig in diesem Bereich, vorzugsweise möglichst nahe an der formgebenden Fläche, eine entsprechende Kühlleistung bereitzustellen.

Darüber hinaus ermöglicht die Anordnung des Kühlkanals in dem Bereich zwischen der formgebenden Oberfläche und der konischen Fläche eine Kühlung der Halsbacke über die gesamte axiale Erstreckung der formgebenden Oberfläche hinweg. Auf diese Weise kann der Flaschenhals des Vorformlings gleichmäßig gekühlt werden, so dass Inhomogenitäten im Material des Vorformlings vermieden werden.

Dabei ist es vorteilhaft, wenn die konische Fläche von einem separaten Konusteil gebildet wird, das als Verschlusselement ausgebildet ist. Auf diese Weise lassen sich auch im Bereich zwischen der formgebenden Oberfläche und der konischen Fläche ein Kühlkanal mit Abschnitten einbringen, deren Wände ausschließlich von dem Grundkörper gebildet werden. Die an diese Abschnitte des Kühlkanals angrenzenden Abschnitte, welche zur Fertigung zunächst offene Bereiche aufweisen, können dann mit Hilfe des als Verschlusselement ausgebildeten Konusteils verschlossen werden, so dass ein geschlossener Kühlkanal zur Verfügung gestellt wird.

Auch wenn es vorteilhaft ist, Ausnehmungen bei der Bildung des Kühlkanals ausschließlich am Grundkörper der Halsbacke vorzusehen, gibt es Ausführungsformen, bei denen es notwendig oder zweckmäßig ist, wenn das Verschlusselement Nuten oder Ausnehmungen zur Führung des Fluids aufweist.

Erfindungsgemäß weist der Kühlkanal einen gekrümmten Abschnitt auf, dessen Wände von dem Grundkörper der Halsbacke und nur an einem oder beiden Enden zumindest teilweise von dem Verschlusselement gebildet werden. Solche gekrümmten Kühlkanäle können insbesondere dann, wenn sie eine im wesentlichen zur Halsbackenachse senkrechte Ausrichtung aufweisen, einen äquidistanten Abstand zur formgebenden Oberfläche einhalten, so dass in Umfangsrichtung eine über die formgebende Oberfläche weitgehend homogene Kühlleistung erzielt wird.

Solche gekrümmten Abschnitte des Kühlkanals, deren Wände von dem Grundkörper der Halsbacke gebildet werden und nur an einem oder beiden Enden zumindest teilweise von dem Verschlusselement, lassen sich vorzugsweise mit Hilfe eines Funkenerosionsverfahrens herstellen. Dabei wird eine Erosionselektrode, die um eine im wesentlichen mit der Halsbackenachse zusammenfallende Achse drehbar gelagert ist und so an einem Werkzeughalter montiert ist, dass sie in den Kühlkanal eingeführt werden kann, verwendet, um den gekrümmten Kühlkanal zu fertigen.

Ein solcher Kühlkanal weist nach der Herstellung nur ein offenes Ende auf, durch welches die Erosionselektrode in den Kühlkanal eingeführt wurde. Dieses Ende wird mit Hilfe des erfindungsgemäßen Verschlusselementes verschlossen. Werden die Enden darüber hinaus mit dem Einlass- bzw. dem Auslasskanal verbunden, so entsteht ein geschlossener Kühlkanal, welcher der Kontur der formgebenden Oberfläche in idealer Weise folgt.

Es ist zweckmäßig, wenn der Kühlkanal genau zwei in Richtung der Halsbackenachse voneinander beabstandete, gekrümmte Abschnitte aufweist, die an mindestens einem Ende durch einen Verbindungsabschnitt miteinander verbunden sind. Dabei werden die Wände des Verbindungsabschnitts zumindest teilweise von dem Verschlusselement gebildet. Auf diese Weise wird in Richtung der Halsbackenachse eine bessere Verteilung der Kühlleistung erreicht.

Liegen beispielsweise die zunächst offenen Enden der Kühlkanäle übereinander, so kann durch Ausbilden einer im wesentlichen zur Halsbackenachse parallelen Nut ein Verbindungsabschnitt zwischen den beiden in Richtung der Halsbackenachse beabstandeten gekrümmten Abschnitten geschaffen werden, welcher abschließend mit Hilfe des Verschlusselements abgeschlossen wird. Werden nun die beiden von dem Grundkörper der Halsbacke abgeschlossenen Enden der gekrümmten Abschnitte des Kühlkanals mit dem Einlass- bzw. Auslasskanal verbunden, so ergibt sich ein geschlossener Kanal von dem Einlass über dem Einlasskanal zu dem ersten gekrümmten Abschnitt des Kühlkanals und von dort über den im wesentlichen vertikalen Verbindungsabschnitt zu dem zweiten gekrümmten Abschnitt und durch diesen zum Auslasskanal und zum Auslass.

Alternativ können an beiden Enden der gekrümmten Abschnitte des Kühlkanals mit einem Verschlusselement versehene Verbindungsabschnitte vorgesehen sein, wobei der Einlass- bzw. Auslasskanal zwischen den beiden Enden der gekrümmten Abschnitte des Kühlkanals mit diesen verbunden sind, so dass sich der einströmende Fluidstrom in zwei Zweige aufteilt. Die zu der Halsbackenachse im wesentlichen parallelen Verbindungsabschnitte werden in der gleichen Strömungsrichtung durchlaufen.

Durch das Erodieren der Kanäle ist es darüber hinaus möglich einen Kühlkanal mit beliebigem, nicht kreisförmigen Querschnitt herzustellen. Dies gilt insbesondere für diejenigen Abschnitte des Kühlkanals deren Wände vollständig vom Grundkörper der Halsbacke gebildet werden. Demgegenüber weisen die gebohrten Kühlkanäle aus dem Stand der Technik immer einen kreisförmigen Querschnitt auf. So weisen bevorzugte Ausführungsformen der erfindungsgemäßen Halsbacke einen Kühlkanal mit quadratischem, rechteckigem, dreieckigen und sichelförmigen Querschnitt auf. Insbesondere ist es dabei zweckmäßig, wenn der Querschnitt des Kühlkanals der formgebenden Oberfläche derart angepasst ist, dass der Kühlkanal einen möglichst großen Oberflächenbereich aufweist, der im wesentlichen parallel zur formgebenden Oberfläche verläuft.

Auch ist es möglich den gekrümmten Abschnitt des Kühlkanals von zwei Enden her zu erodieren.

In einer alternativen Ausführungsform weist der gekrümmte Abschnitt des Kühlkanals zwei oder mehr Sektionen auf, die sich über einen Winkelabschnitt von 90 deg. oder weniger erstrecken, wobei die einzelnen Sektionen untereinander durch weitere im wesentlichen gerade Abschnitte miteinander verbunden sind.

Vorteilhaft ist es darüber hinaus, wenn der Kühlkanal einen minimalen Abstand von weniger als 10 mm, vorzugsweise von weniger als 5 mm und besonders bevorzugt von weniger als 3 mm von der formgebenden Oberfläche aufweist.

Die der Erfindung zugrunde liegende Aufgabe wird auch durch eine Spritzgießform zur Herstellung von Hohlkörperformlingen mit mindestens einer Halsbacke mit den zuvor genannten Merkmalen gelöst.

Darüber hinaus stellt die vorliegende Erfindung ein Verfahren zur Herstellung eines Kühlkanals in einer Halsbacke mit einem Grundkörper bereit, wobei wie zuvor beschrieben, mit Hilfe eines Funkenerosionsverfahrens ein zumindest teilweise gekrümmter Abschnitt des Kühlkanals aus dem Grundkörper ausgenommen wird, wobei der Abschnitt des Kühlkanals an einem Ende eine Öffnung aufweist und dessen Wände im übrigen vollständig von dem Grundkörper gebildet werden.

Weitere Vorteile, Merkmale und Anwendungsmöglichkeiten der vorliegenden Erfindung werden anhand der folgenden Beschreibung bevorzugter Ausführungsformen sowie der dazugehörigen Figuren deutlich. Es zeigen:
- Fig. 1: eine perspektivische Ansicht einer Ausführungsform einer Halsbacke gemäß dem Stand der Technik,
- Fig. 2: eine Seitenansicht der Halsbacke aus Fig. 1,
- Fig. 3: eine zweite Ausführungsform einer Halsbacke gemäß dem Stand der Technik,
- Fig. 4: eine Seitenansicht der Halsbacke aus Fig. 3,
- Fig. 5: eine schematische Darstellung einer ersten erfindungsgemäßen Ausführungsform einer Halsbacke mit Kühlkanal,
- Fig. 6: eine seitliche Schnittansicht der erfindungsgemäße Halsbacken aus Fig. 5,
- Fig. 7: eine schematische Darstellung einer zweiten Ausführungsform der erfindungsge- mäßen Halsbacke,
- Fig. 8: eine seitliche Schnittansicht der Halsbacke aus Fig. 7,
- Fig. 9: eine Aufsicht von unten der erfindungsgemäßen Halsbacke aus Fig. 7 und Fig. 8,
- Fig. 10: eine schematische Darstellung einer dritten Ausführungsform der erfindungsge- mäßen Halsbacke,
- Fig. 11: eine schematische Darstellung einer weiteren Ausführungsform der erfindungs- gemäßen Halsbacke,
- Fig. 12: eine seitliche Schnittansicht der Halsbacke aus Fig. 11,
- Fig. 13: eine schematische Darstellung einer alternativen Ausführungsform der erfin- dungsgemäßen Halsbacke,
- Fig. 14: eine seitliche Schnittansicht durch eine alternative Ausführungsform der Halsba- cke,
- Fig. 15: eine schematische Darstellung einer Ausführungsform der erfindungsgemäßen Halsbacke,
- Fig. 16: eine seitliche Schnittansicht durch die Halsbacke aus Fig. 15,
- Fig. 17: eine schematische Darstellung einer weiteren Ausführungsform der erfindungs- gemäßen Halsbacke,
- Fig. 18: eine schematische Darstellung einer alternativen Ausführungsform der erfin- dungsgemäßen Halsbacke,
- Fig. 19: eine seitliche Schnittansicht durch die erfindungsgemäße Halsbacke aus Fig. 18,
- Fig. 20: eine Ansicht von unten auf die erfindungsgemäße Halsbacke aus Fig. 18 und Fig. 19,
- Fig. 21: eine schematische Ansicht eines Werkzeugs zur Herstellung der Halsbacke aus Fig. 18 bis Fig. 20.

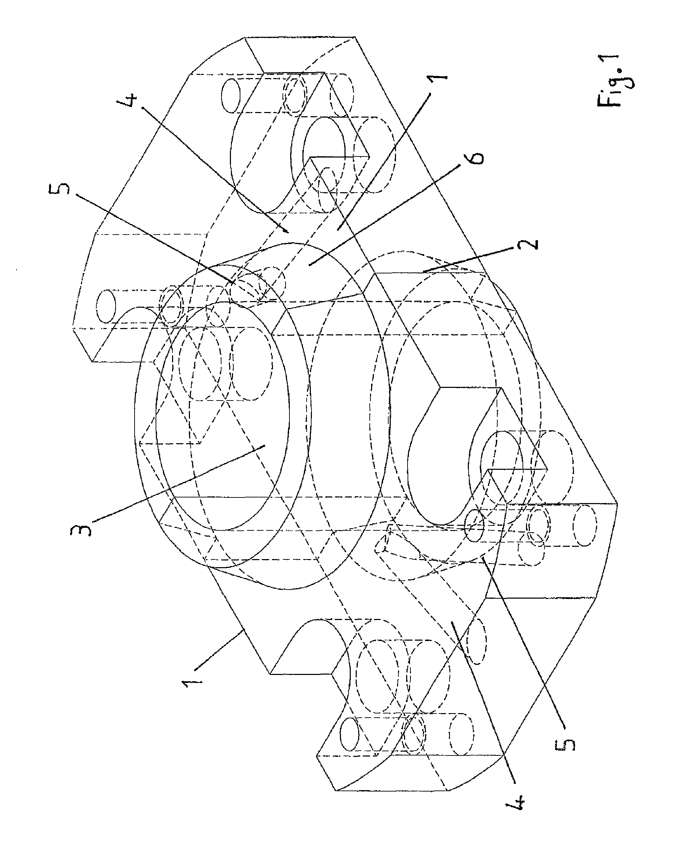

Fig. 1 zeigt eine Halsbacke gemäß einer Ausführungsform des Standes der Technik. Die in Fig. 1 gestrichelt gezeichneten Linien liegen innerhalb des Werkzeuges und können bei einer normalen Draufsicht auf das Werkzeug nicht gesehen werden. Sie dienen hier der Verdeutlichung des inneren Verlaufs der einzelnen Kanäle.

Das dargestellte Werkzeug weist zwei Halsbacken auf, wobei jede einen Grund- bzw. Werkzeugkörper 1 aufweist. Die in Fig. 1 gezeigten Halsbacken können an der Trennfläche 2 auseinandergezogen werden. Das Werkzeug hat eine im wesentlichen zylindrische Innenkontur, die einen Formraum 3 umgibt. Die Halsbacken sind Teil eines Spritzgießwerkzeuges. Im Spritzgießverfahren wird in das vollständig geschlossene Spritzgießwerkzeugteil der plastifizierte Kunststoff eingespritzt, der sich an die entsprechenden Konturen des Werkzeuges anlegt und sich verfestigt. Nach der Verfestigung kann das Spritzgießwerkzeug geöffnet werden und der Formling dem Werkzeug entnommen werden. Die Halsbacken weisen an ihrer Ober- und Unterseite jeweils einen Konus 6 auf, der mit anderen Spritzgießwerkzeugteilen zusammenwirkt, die hier jedoch nicht gezeigt sind.

Wie bereits ausgeführt wurde, muss der Formling, bzw. im Fall der gezeigten Halsbacke der Vorformling, solange im Werkzeug verbleiben, bis das thermoplastische Material fest geworden ist. Dies erfolgt umso schneller, je effektiver das Spritzgießwerkzeugteil gekühlt wird. Grundsätzlich ist ein schnelles Erstarren des Vorformlings wünschenswert, da dann die Zykluszeit verkürzt werden kann und das Werkzeug schneller für die Herstellung eines weiteren Vorformlings zur Verfügung steht.

Zur schnelleren Kühlung insbesondere in der Nähe der Innenkontur, die den Hohlraum 3 bildet, ist es bereits üblich, zwei Kühlbohrungen 4 und 5 in den Werkzeugkörper 1 einzubringen. Zur Kühlung wird das Kühlfluid, zumeist Kühlwasser, durch die eine Kühlbohrung 4 eingebracht und läuft dann aufgrund der Verbindung der beiden Bohrungen über die andere Kühlbohrung 5 wieder aus dem Werkzeug heraus.

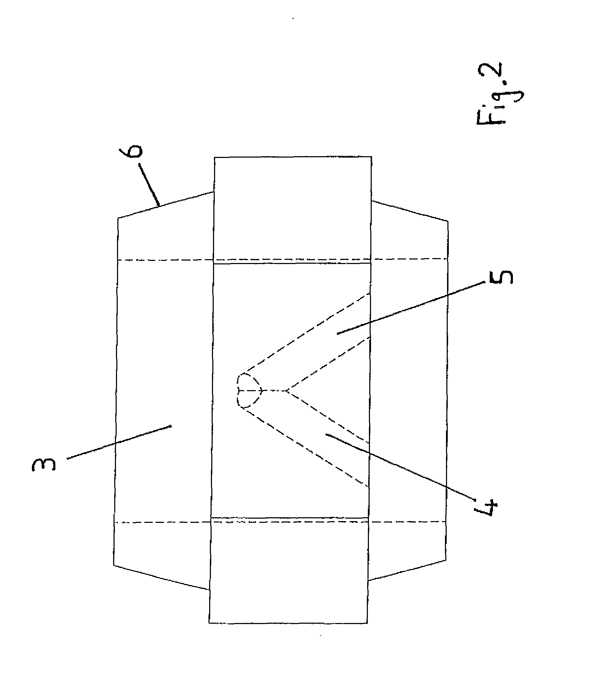

Fig. 2 zeigt eine Seitenansicht der Ausführungsform von Fig. 1, wobei erneut die inneren Bohrungen bzw. Kanäle gestrichelt dargestellt sind. Zu erkennen ist auch hier der konusförmige Anschluss 6 sowie die innere Öffnung 3, in welcher der Vorformling angeordnet ist. Die Kühlbohrungen 4 und 5 sind V-förmig angeordnet. Hierzu werden lediglich zwei Sackbohrungen in das Werkzeugteil eingebracht, so dass der Bohrgrund in der entsprechenden anderen Bohrung endet. Die beiden Kühlbohrungen sind somit innerhalb des Werkzeugkörpers 1 miteinander verbunden. Man erkennt deutlich, dass die Kühlung im wesentlichen nur punktförmig erfolgt, d.h. an dem Punkt, an dem sich die beiden Kühlbohrungen 4, 5 treffen.

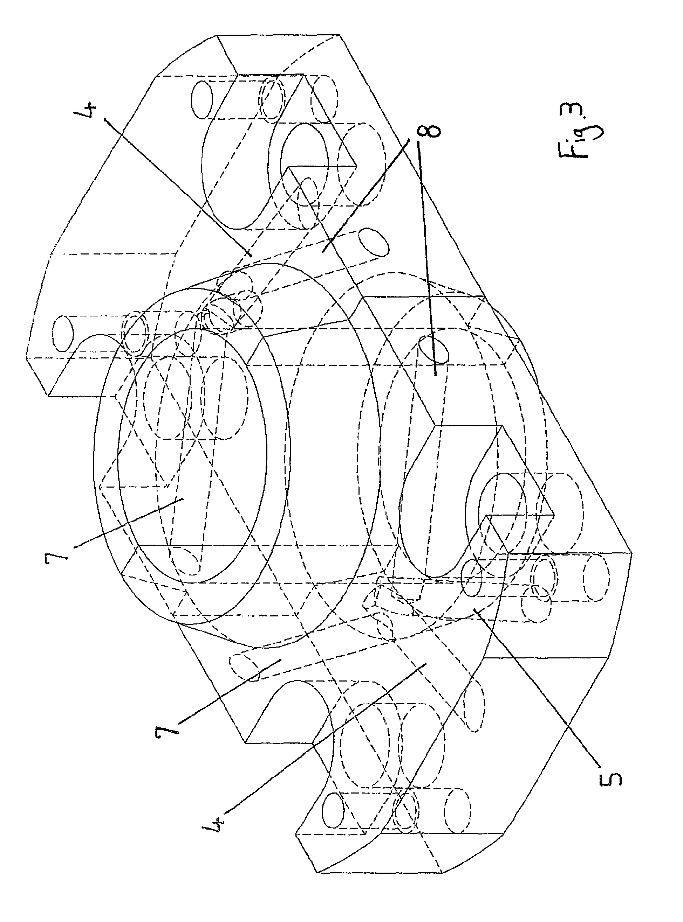

In Fig. 3 ist eine weitere Ausführungsform des Standes der Technik gezeigt. Diese entspricht im wesentlichen der Ausführungsform von Fig. 1, wobei hier zusätzlich Bohrungen 7 und 8 eingebracht worden sind, die in der Nähe oder sogar innerhalb der beiden Kühlbohrungen 4 und 5 enden. Die zusätzlichen Bohrungen 7, 8 sind für die Aufnahme sogenannter Kühlstifte vorgesehen. Diese Kühlstifte werden in die Bohrungen 7, 8 eingeführt und verschließen diese vollständig. Die Kühlstifte sind aus einem Material hergestellt, dessen Wärmeleitfähigkeit sehr viel größer ist als die Wärmeleitfähigkeit des Materials, aus dem der Werkzeugkörper 1 des Spritzgusswerkzeugteils hergestellt ist. Beispielsweise sind die Kühlstifte aus reinem Silber hergestellt. Durch die Kühlstifte mit erhöhter Wärmeleitfähigkeit wird im Bereich der mit der heißen plastifizierten Masse beaufschlagten Innenkontur eine verbesserte Kühlung erzielt.

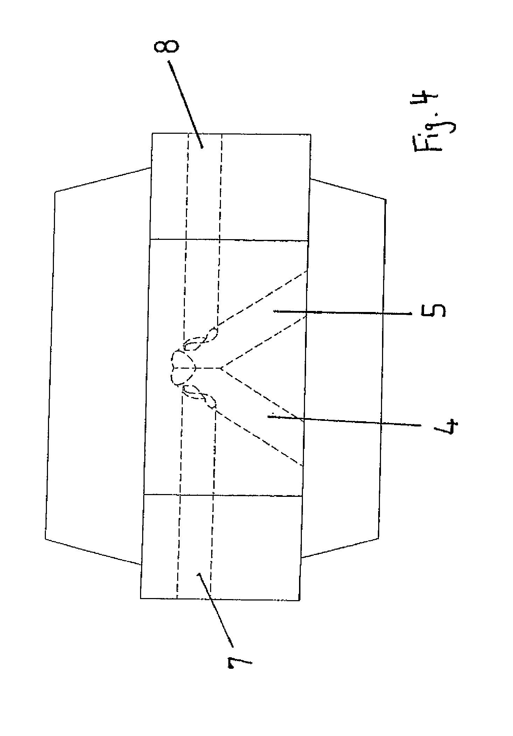

In Fig. 4 ist eine Seitenansicht der Ausführungsform gezeigt. Deutlich zu erkennen ist, dass durch die Kühlbohrungen 4, 5 erneut ein V-förmiger Kühlkanal gebildet wird. Der Kühlkanal stellt somit eine punktförmige Kühlung zur Verfügung, die in diesem Fall mithilfe der Kühlstifte mit erhöhter Wärmeleitfähigkeit etwas gleichmäßiger verteilt wird.

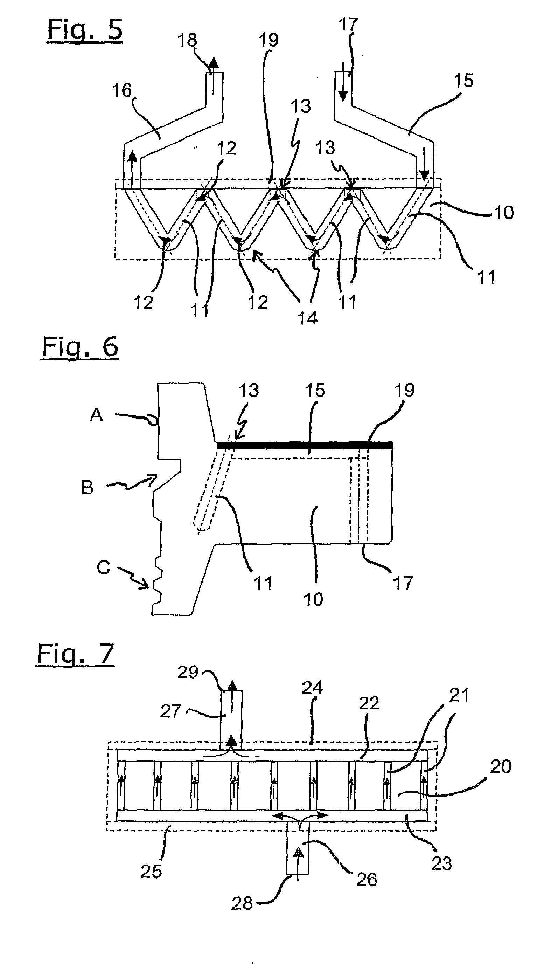

In Fig. 5 ist eine schematische Schnittansicht durch eine erste erfindungsgemäße Ausführungsform der Halsbacke dargestellt. In dem Grund- bzw. Werkzeugkörper 10 der Halsbacke, der in der dargestellten Ausführungsform aus Werkzeugstahl hergestellt ist, sind acht Sackbohrungen 11 eingebracht, welche zusammen den Kühlkanal bilden. Die Sackbohrungen 11 sind derart angeordnet, dass jeweils zwei benachbarte Bohrungen einen Winkel einschließen, so dass sie sich an ihrem oberen oder unteren Ende überschneiden, wobei ein zusammenhängender Kanal gebildet wird. Dabei bilden die Überschneidungsbereiche der einzelnen Sackbohrungen Verbindungsstellen 12 zwischen den einzelnen Bohrungen des Kanals. Der durch die Sackbohrungen 11 gebildete Kühlkanal lässt sich in Abschnitte 13, 14 unterteilen, wobei die Abschnitte 14 derart ausgestaltet sind, dass sie in dem Grundkörper 10 verlaufen und ihre Wände von dem Grundkörper gebildet werden. Die an die Abschnitte 14 anschließenden Verbindungsabschnitte 13 hingegen weisen zumindest einen Wandabschnitt auf, welcher durch ein auf den Grundkörper 10 aufgesetztes Verschlusselement, in der dargestellten Ausführungsform eine Verschlussplatte 19, gebildet wird. Die beiden außenliegenden Sackbohrungen 11 sind über den Einlasskanal 15 bzw. den Auslasskanal 16 mit dem Einlass 17 bzw. dem Auslass 18 verbunden, so dass sich ein geschlossener Kühlkanal von dem Einlass 17 bis zu dem Auslass 18 ergibt. Dabei ist die Darstellung in Fig. 5 in Bezug auf den Verlauf des Einlass- 15 bzw. Auslasskanals 16 nur schematisch.

In Fig. 6 ist eine seitliche Schnittansicht durch eine Halsbacke mit einem Kühlkanal, sowie er in Fig. 5 dargestellt ist, gezeigt. Deutlich ist der Verlauf einer Sackbohrung 11 innerhalb des Grundkörpers 10 zu erkennen. Der Kühlkanal, d.h. und daher die Bohrungen 11, ist gegenüber der Halsbackenachse geneigt, um einen möglichst engen Abstand zwischen Kühlkanal und der formgebenden Oberfläche A der Halsbacke zu ermöglichen. Auch ist die Abdeckung des Verbindungsabschnitts 13 des Kühlkanals mit Hilfe der Verschlussplatte 19 deutlich zu erkennen. In der dargestellten Ausführungsform dient die Verschlussplatte 19 sowohl als Wand für den Verbindungsabschnitt 13 als auch für die Einlass- 15 und Auslasskanäle 16.

In Fig. 6 ist auch deutlich der Aufbau der Form zu erkennen. Die formgebende Oberfläche A weist eine Ausnehmung B auf, welche den Halsring der Flasche bildet und Ausnehmungen C zur Formung des Gewindes.

In einer alternativen, hier nicht dargestellten Ausführungsform können die Sackbohrungen 11 durch Durchgangsbohrungen ersetzt werden, so dass auch an der Unterseite des Grundkörpers 10 der Kühlkanal Verbindungsabschnitte aufweist, die mit Hilfe einer Verschlussplatte verschlossen werden müssen.

In Fig. 7 ist eine alternative Ausführungsform des Kühlkanals dargestellt. Dabei weist auch dieser Kühlkanal Abschnitte 21 auf, deren Wände vollständig von dem Grundkörper 20 der Halsbacke gebildet werden, während Verbindungsabschnitte 22, 23 vorgesehen sind, welche auch von Verschlussplatten 24, 25 begrenzt werden. Der Kühlkanal aus Fig. 7 ist derart ausgestaltet, dass zwei Horizontalbschnitte 22, 23 aufweist, die senkrecht zu der Halsbackenachse angeordnet sind und die in axialer Richtung voneinander beabstandet sind. Dabei werden diese horizontalen Abschnitte 22, 23 von Einfräsungen in den Grundkörper 20 der Halsbacke gebildet und mit Hilfe der Verschlussplatten 24, 25, welche auf den Grundkörper 20 aufgelötet sind, verschlossen. Die Horizontalabschnitte 22, 23 sind durch insgesamt neun Vertikalabschnitte 21 miteinander verbunden. Der Einlasskanal 26 verbindet den Einlass 28 mit dem unteren Horizontalabschnitt des Kühlkanals, während der Auslasskanal 27 den oberen Horizontalabschnitt 22 mit dem Auslass 29 verbindet. Auf diese Weise wird ein in den Kühlkanal einströmendes Fluid die Vertikalabschnitte 21 im wesentlichen gleichzeitig und in gleicher Fliessrichtung durchfließen.

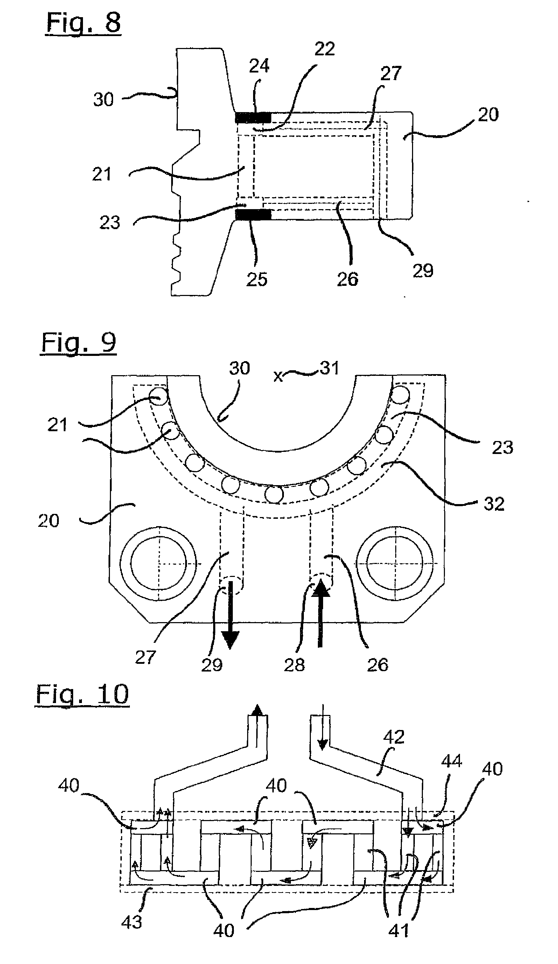

Fig. 8 zeigt eine seitliche Schnittansicht durch die erfindungsgemäße Halsbacke mit einem Kühlkanal, sowie sie schematisch in Fig. 7 dargestellt ist. Dabei ist insbesondere die Anordnung der Vertikal- 21 und Horizontalabschnitte 22, 23 verdeutlicht.

Die Verschlussplatten 24, 25 sind in Ausnehmungen in dem Grundkörper 20 der Halsbacke eingesetzt. Dabei ist es entscheidend, dass die Verschlussplatten 24, 25 bündig mit der Oberfläche des Grundkörpers abschließen und derart mit dem Grundkörper 20 verbunden sind, dass kein Lot über die Flucht des Grundkörpers 20 übersteht. Dazu sind die Aussparungen 32, in denen die Verschlussplatten 24, 25 aufgenommen sind, derart dimensioniert, dass sie das gesamte Lot auch nach dem Lötvorgang aufnehmen können.

In der dargestellten Ausführungsform ist das Lot ein Sprühlot, welches eine geringfügig höhere Fliesstemperatur aufweist als die typische Härtetemperatur für den Grundkörper verwendeten Werkzeugstahl. Auf diese Weise können der Lötprozess sowie der Härteprozess für das Werkzeug miteinander verbunden werden, in dem beim Härten des Werkzeugs dieses zunächst auf die Fliesstemperatur des Lots erwärmt wird, so dass sich die Verschlussplatten 24, 25 mit dem Grundkörper 20 verbinden, bevor das Werkzeug abgekühlt wird, um es bei der vorgesehen Härtetemperatur zu härten.

In Fig. 9 ist eine Ansicht von unten auf die Halsbacke aus Fig. 7 und Fig. 8 dargestellt. Deutlich sind die halbkreisförmig um die formgebende Oberfläche 30 der Halsbacke herum angeordneten Bohrungen zu erkennen, welche die zu der Halsbackenachse 30 parallelen Vertikalabschnitte 21 bilden. Die Vertikalabschnitte 21 sind mit einem aus dem Grundkörper ausgenommen Horizontalabschnitt 23 verbunden, wobei der Horizontalabschnitt 23 in Fig. 9 ohne die Verschlussplatte 25 dargestellt ist, so dass die Ausnehmung 32 zur Aufnahme der Verschlussplatte 25 in Fig. 9 deutlich zu erkennen ist.

In Fig. 10 ist eine weitere alternative Ausführungsform der erfindungsgemäßen Halsbacke in einer schematischen Schnittansicht dargestellt. Im Gegensatz zu der Ausführungsform gemäß den Fig. 7, Fig. 8 und Fig. 9 weist der Kühlkanal in Fig. 10 nicht nur zwei sondern insgesamt sieben Horizontalabschnitte 40 auf, welche durch Vertikalabschnitte 41 verbunden sind. Dabei sind die Vertikalabschnitte 41 zwischen den Horizontalabschnitten 40 derart angeordnet, dass das durch den Einlasskanal 42 in den Kühlkanal einströmende Fluid von den sich aneinander anschließenden Horizontal- 40 und Vertikalabschnitten 41 mäanderförmig geführt wird. In der dargestellten Ausführungsform werden die Horizontalabschnitte 40, welche die Verbindungsabschnitte im Sinne der vorliegenden Erfindung bilden, von einer oberen und einer unteren Verschlussplatte 43, 44 abgedeckt.

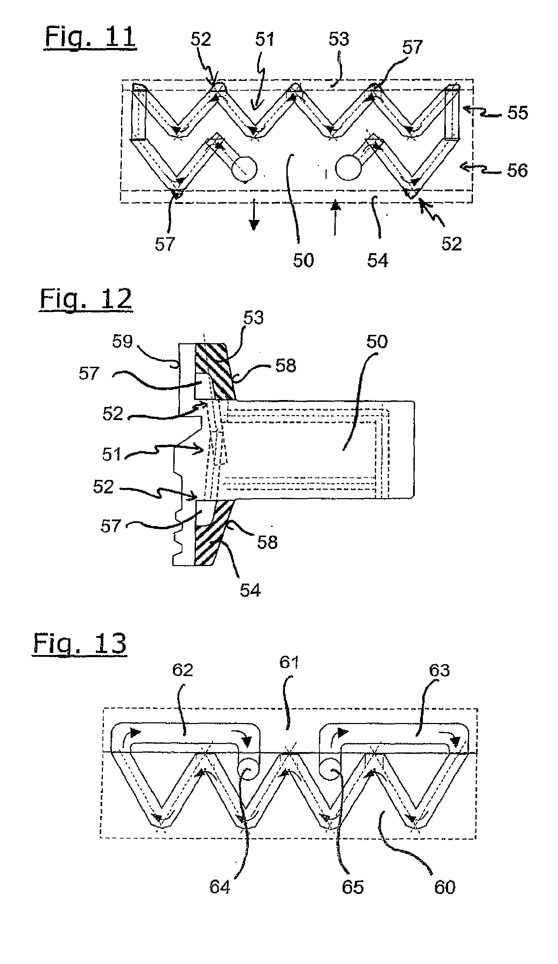

Fig. 11 zeigt eine seitliche Schnittansicht einer alternativen Ausführungsform einer Halsbacke, die der Ausführungsform gemäß den Fig. 5 und Fig. 6 in der Ausgestaltung der einzelnen Abschnitte des Kühlkanals ähnlich ist. Auch in dieser Ausführungsform weist der Kühlkanal durch eine entsprechende Anordnung von Sackbohrungen Abschnitte auf, deren Wände von dem Grundkörper 50 gebildet werden sowie Verbindungsabschnitte 52, deren Wände sowohl von dem Grundkörper 50 als auch von Verschlusselementen 53, 54. Dabei weist entgegen der Fig. 5 die in Fig. 11 dargestellte Ausführungsform zwei Verschlusselemente 53, 54 auf, um die Verbindungselemente 52 zweier in Richtung der Halsbackenachse beabstandeter Abschnitte 55, 56 des Kühlkanals zu begrenzen. Dabei haben in der dargestellten Ausführungsform die Verschlusselemente 53, 54 Ausnehmungen 57, welche im Bereich der Verbindungsabschnitte angeordnet sind und in diesem Bereich den freien Durchmesser des Kühlkanals vergrößern.

In der in Fig. 12 dargestellten seitlichen Schnittansicht durch die Halsbacke aus Fig. 11 ist zu erkennen, dass die Verschlusselemente 53 und 54 nicht wie in den zuvor dargestellten Ausführungsformen von Verschlussplatten gebildet werden, sondern von Konusteilen 53, 54, welche auf den Grundkörper 50 der Halsbacke aufgesetzt sind. Diese Konusteile sind im Stand der Technik einstückig mit dem Grundkörper 50 der Halsbacke ausgeführt und dienen dazu, über die konischen Flächen 58, die von der Schließeinheit auf die Spritzgießform in Halsbackenrichtung ausgeübte Kraft in eine radiale Kraftkomponente zu überführen, welche geeignet ist, die beiden Halsbacken einer Spritzgießform für einen Vorformling währen des Spritzgießvorgangs zusammenzudrücken. Durch diese erfindungsgemäße Ausgestaltung der Konusteile ist es möglich, wie in Fig. 12 zu erkennen, den Kühlkanal mit seinen Abschnitten 51, 52 sehr nah an der formgebenden Fläche 59 der Halsbacke anzuordnen. Der Kühlkanal ist dabei in der in Fig. 12 dargestellten Ausführungsform in einen Bereich zwischen der formgebenden Oberfläche 59 und der konischen Oberfläche 58 angeordnet.

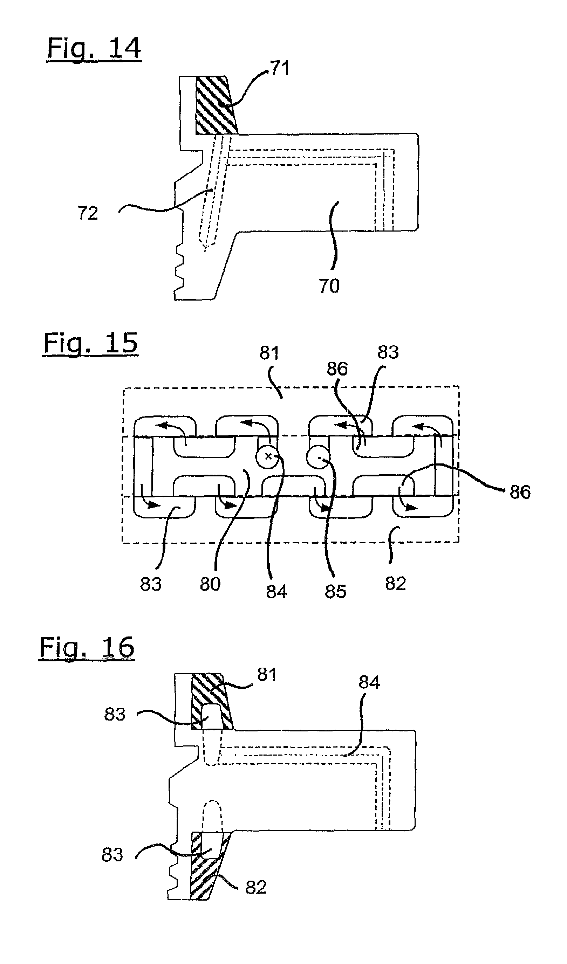

Auch die in den Fig. 13 und Fig. 14 dargestellten Ausführungsformen weisen von den Grundkörpern 60, 70 der Halsbacken separate Konusteile 1, 1 auf. Dabei ist das Konusteil 1 in Fig. 13 mit zusätzlichen Kanälen 62, 63 ausgestattet, welche als Einlass- bzw. Auslasskanäle dienen und den Einlass 65 mit dem Kühlkanal bzw. den Kühlkanal mit dem Auslass 64 verbinden. Dem gegenüber ist das Konusteil 71 aus Fig. 14 ohne Ausnehmungen oder Kanäle ausgestaltet und dient lediglich als Wand für die Verbindungsbereiche des Kühlkanals 72.

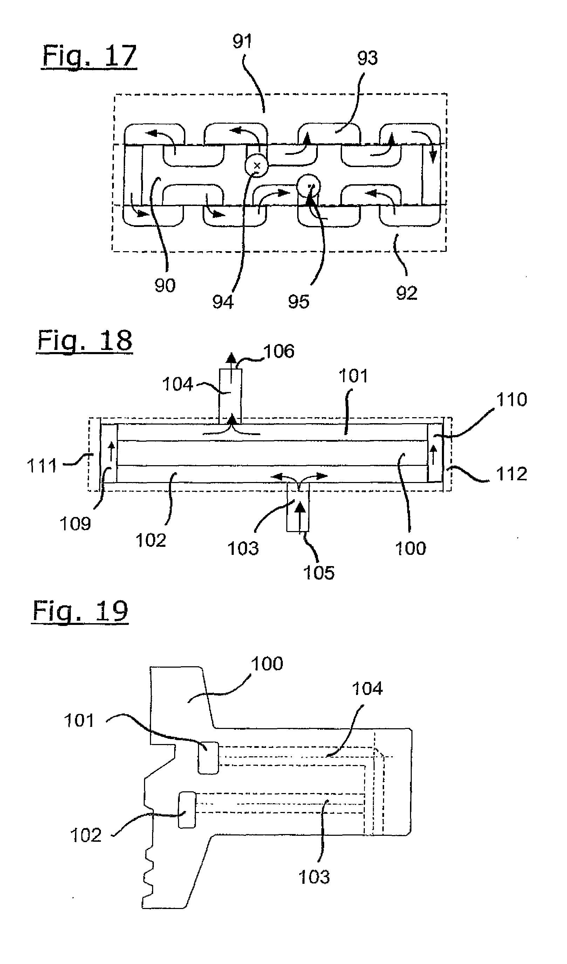

Die Fig. 15 und Fig. 17 zeigen schematische Schnittansichten von Ausführungsformen der erfindungsgemäßen Halsbacke mit je zwei Verschlusselementen 81, 82 bzw. 91, 92, die als separate Konusteile ausgestaltet sind. Dabei weisen die separaten Konusteile 81, 82 bzw. 91, 92 Ausnehmungen 83 bzw. 93 auf, die zum Führen des Fluids zwischen den in dem Grundkörper 80, 90 der Halsbacke vorgesehen Kanalabschnitten dienen. Fig. 16 zeigt eine seitliche Schnittansicht durch eine Halsbacke gemäß Fig. 15.

Die in den Fig. 15 und Fig. 17 dargestellten alternativen Ausführungsformen der erfindungsgemäßen Halsbackenkühlung unterscheiden sich voneinander durch die unterschiedliche Anordnung der Einlass- 84, 94 und Auslasskanäle 85, 95. In Fig. 15 sind sowohl der Einlass- als auch der Auslasskanal mit einem oberen Abschnitt des Kühlkanals verbunden, so dass die einzelnen Abschnitte des Kühlkanals seriell nacheinander vom gleichen Flüssigkeitsstrom durchflossen werden. Dem gegenüber sind der Einlasskanal 94 und der Auslasskanal 95 bei der in Fig. 17 dargestellten Ausführungsform derart angeordnet, dass sie mit dem oberen bzw. dem unteren Abschnitt des Kühlkanals verbunden sind, so dass sich eine parallele Durchströmung eines linken und eines rechten Bereichs des Kühlkanals ergibt. Auf diese Weise verzweigt sich der Fluidstrom durch den Kühlkanal und es entsteht eine "parallele" Anordnung der einzelnen Abschnitte des Kühlkanals.

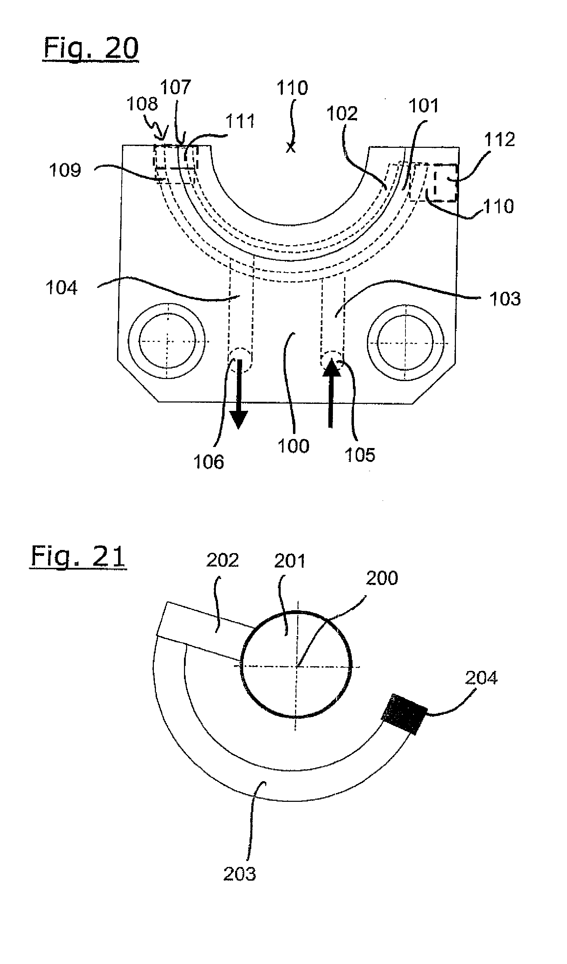

In den Fig. 18 bis Fig. 20 ist eine weitere alternative Ausführungsform der Erfindung dargestellt, welche gekrümmt horizontale Abschnitte 101, 102 des Kühlkanals aufweist. Wie insbesondere aus der Darstellung in Fig. 19 hervorgeht, werden die Wände der horizontalen Abschnitte 101, 102 des Kühlkanals ausschließlich vom Grundkörper 100 der Halsbacke gebildet. Die Krümmung der horizontalen Abschnitte 101, 102 ist in der Ansicht von unten auf die Halsbacke in Fig. 20 deutlich zu erkennen. Diese gekrümmten Abschnitte werden mit Hilfe von Funkenerosion von der Stirnseite 107 her aus dem Grundkörper 100 ausgenommen. Dadurch entsteht ein offenes Ende 108 der horizontalen Abschnitte 101, 102 des Kühlkanals. An diesem offenen Ende 108 ist eine Ausnehmung 109 vorgesehen, welche einen vertikalen Abschnitt des Kühlkanals bildet und eine Fluidverbindung zwischen dem oberen horizontalen Abschnitt 101 und dem unteren horizontalen Abschnitt 102 herstellt. Ein eben solcher vertikaler Abschnitt 110 ist an dem geschlossenen Ende der horizontalen Abschnitte 101, 102 vorgesehen, so dass auch hier eine Fluidverbindung zwischen dem oberen 101 und dem unteren Abschnitt 102 vorgesehen ist. Die vertikalen Abschnitte 109, 110 sind mit Verschlusselementen 111, 112 verschlossen, so dass ein vollständig geschlossener Kühlkanal gebildet ist. Der Einlasskanal 103 bzw. der Auslasskanal 104 verbinden den Einlass 105 mit dem unteren horizontalen Abschnitt 102 des Kühlkanals sowie den oberen horizontalen Abschnitt 101 des Kühlkanals mit dem Auslass 106, so dass auch in dieser Ausführungsform eine "Parallelkonfiguration" des Kühlkanals vorliegt.

Fig. 21 zeigt das Werkzeug für die Funkenerosion, welches es ermöglicht, die gekrümmten horizontalen Kanäle 101, 102 aus dem Grundkörper 100 der Halsbacke auszunehmen. Das Werkzeug ist um eine Achse 200 drehbar gelagert, wobei auf der Welle 201 ein Ausleger 202 befestigt ist, welcher eine Länge hat, die im wesentlichen dem Abstand des Kühlkanals, z. B. 101, von der Halsbackenachse 110 entspricht. An dem Ausleger ist ein gekrümmter Werkzeughalter 203 befestigt, dessen Krümmung der Krümmung des Kühlkanals entspricht, so dass der Werkzeughalter 203 beim Ausnehmen des Kühlkanals in diesen eingeführt werden kann. Am vorderen Ende des Werkzeughalters 203 ist eine Funkenerosionsspitze 204 angebracht, welche die eigentliche Funkenerosion bewirkt und damit die Materialabtragung zur Ausnehmung des Kühlkanals 101 aus dem Grundkörper 100 der Halsbacke ermöglicht.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende explizite Darstellung sämtlicher denkbarer Merkmalskombinationen wird hier nur der Kürze und der Lesbarkeit der Beschreibung wegen verzichtet.

### Bezugszeichenliste

- 1: Werkzeugkörper
- 2: Trennfläche
- 3: Hohlraum
- 4: Kühlbohrung
- 5: Kühlbohrung
- 6: konusförmiger Anschluss
- 7: zusätzliche Bohrung
- 8: zusätzliche Bohrung
- 10: Grundkörper
- 11: Sackbohrung
- 12: Verbindungsstellen
- 13: Verbindungsabschnitt des Kühlkanals
- 14: Verbindungsabschnitt des Kühlkanals
- 15: Einlasskanal
- 16: Auslasskanal
- 17: Einlass
- 18: Auslass
- 19: Verschlussplatte
- A: formgebende Oberfläche
- B: Halsring
- C: Gewinde
- 20: Grundkörper
- 21: Vertikalabschnitt
- 22: Horizontalabschnitt
- 23: Horizontalabschnitt
- 24: Verschlussplatte
- 25: Verschlussplatte
- 26: Einlasskanal
- 27: Auslasskanal
- 28: Einlass
- 29: Auslass
- 30: formgebende Oberfläche
- 32: Ausnehmung
- 40: Horizontalabschnitte
- 41: Vertikalabschnitte
- 42: Einlasskanal
- 43: Verschlussplatte
- 44: Verschlussplatte
- 50: Grundkörper
- 51: Abschnitt des Kühlkanals
- 52: Abschnitt des Kühlkanals
- 53: Verschlussplatte
- 54: Verschlussplatte
- 55: Abschnitt des Kühlkanals
- 56: Abschnitt des Kühlkanals
- 57: Ausnehmungen
- 58: konische Fläche
- 59: formgebende Fläche der Halsbacke
- 60: Grundkörper
- 61: Konusteil
- 62: zusätzlicher Kanal
- 63: zusätzlicher Kanal
- 64: Auslass
- 65: Einlass
- 70: Grundkörper
- 71: Konusteil
- 72: Kühlkanal
- 80: Grundkörper
- 81: Verschlusselement
- 82: Verschlusselement
- 84: Einlasskanal
- 85: Auslasskanal
- 90: Grundkörper
- 94: Einlasskanal
- 95: Auslasskanal
- 100: Grundkörper
- 101: horizontaler Kanal
- 102: horizontaler Kanal
- 105: Einlass
- 107: Stirnseite
- 109: vertikaler Abschnitt
- 111: Verschlusselement
- 112: Verschlusselement
- 200: Achse
- 202: Ausleger
- 203: Werkzeughalter
- 204: Funkenerosionsspitze

## Patentansprüche

1. Verfahren zur Herstellung eines Kühlkanals in einer Halsbacke mit einem Grundkörper, **dadurch gekennzeichnet, dass** mit Hilfe eines Funkenerosionsverfahrens ein zumindest teilweise gekrümmter Abschnitt des Kühlkanals aus dem Grundkörper ausgenommen wird, wobei der Abschnitt des Kühlkanals an mindestens einem Ende eine Öffnung aufweist und dessen Wände vollständig von dem Grundkörper gebildet werden.

2. Verfahren nach Anspruch 1, **dadurch gekennzeichnet, dass** zwei teilweise gekrümmte Abschnitte in den Grundkörper eingebracht werden.

3. Verfahren nach Anspruch 1 oder 2, **dadurch gekennzeichnet, dass** ein die gekrümmten Abschnitte verbindender Abschnitt aus dem Grundkörper ausgenommen wird.

4. Verfahren nach einem der Ansprüche 1 bis 3, **dadurch gekennzeichnet, dass** ein den Einlass bzw. den Auslass mit dem Kühlkanal verbindender Einlass- bzw. Auslasskanal aus dem Grundkörper ausgenommen wird.

5. Verfahren nach einem der Ansprüche 1 bis 4, **dadurch gekennzeichnet, dass** ein Verschlusselement derart mit dem Grundkörper verbunden wird, dass die Abschnitte des Kühlkanals sowie der Einlass- und der Auslasskanal zwischen Einlass und Auslass einen geschlossenen Kanal bilden.

6. Halsbacke eines Formwerkzeuges zur Herstellung eines Hohlkörperformlings mittels Spritzgießen, wobei die Halsbacke einen Grundkörper mit einer formgebenden Oberfläche, die der Außenkontur eines Halsabschnittes des herzustellenden Hohlkörperformlings angepasst ist und dafür vorgesehen ist, beim Spritzgießvorgang mit dem Halsabschnitt des Hohlkörperformlings in Kontakt zu treten, aufweist, wobei weiterhin zumindest ein Kühlkanal für ein Kühlfluid, der zumindest abschnittsweise im wesentlichen parallel zur formgebenden Oberfläche verläuft, ein Einlass und ein Auslass sowie ein Einlasskanal und ein Auslasskanal, die den Einlass bzw. den Auslass mit dem Kühlkanal verbinden, vorgesehen sind, wobei der Kühlkanal näher an der formgebenden Oberfläche angeordnet ist als der Einlass und der Auslass, **dadurch gekennzeichnet, dass** der Kühlkanal zumindest einen im wesentlichen parallel zur formgebenden Oberfläche verlaufenden Abschnitt, der innerhalb des Grundkörpers verläuft, so dass dessen Wände von dem Grundkörper gebildet werden, und einen sich an diesen Abschnitt anschließenden Verbindungsabschnitt, dessen Wände teilweise durch den Grundkörper und teilweise durch ein auf den Grundkörper aufgesetztes Verschlusselement gebildet werden, aufweist, wobei der Kühlkanal einen gekrümmten Abschnitt aufweist, dessen Wände von dem Grundkörper der Halsbacke und nur an einem oder beiden Enden zumindest teilweise von dem Verschlusselement gebildet werden, wobei vorzugsweise der Kühlkanal genau zwei in Richtung der Halsbackenachse beabstandete gekrümmte Abschnitte aufweist, die an mindestens einem Ende mit einem Verbindungsabschnitt miteinander verbunden sind, wobei die Wände von mindestens einem des Verbindungsabschnitts zumindest teilweise von dem Verschlusselement gebildet werden.

7. Halsbacke nach Anspruch 6, **dadurch gekennzeichnet, dass** der Kühlkanal, vorzugsweise der Abschnitt des Kühlkanals, dessen Wände vom Grundkörper gebildet werden, einen nicht kreisförmigen Querschnitt, vorzugsweise einen rechteckigen, quadratischen, ovalen oder sichelförmigen Querschnitt aufweist.

8. Halsbacke nach einem der Ansprüche 6 bis 7, **dadurch gekennzeichnet, dass** das Verschlusselement Nuten oder Ausnehmungen zur Führung des Fluids aufweist.

9. Halsbacke nach einem der Ansprüche 6 bis 8, **dadurch gekennzeichnet, dass** die formgebende Oberfläche zumindest einen Abschnitt einer Negativform eines Gewindes bildet und/oder die formgebende Oberfläche aus Abschnitten besteht, die im wesentlichen die Form eines Teilzylindermantels oder die Form eines Teilkegelstumpfmantels haben, wobei vorzugsweise die Achsen der teilzylinderförmigen Abschnitte und die Achsen der teilkegelstumpfförmigen Abschnitte auf einer Achse, der sogenannten Halsbackenachse liegen.

10. Halsbacke nach einem der Ansprüche 6 bis 9, **dadurch gekennzeichnet, dass** zumindest abschnittsweise der Kühlkanal eine Verzweigung aufweist, so dass für das Kühlfluid beim Durchströmen der Halsbacke vom Einlass zum Auslass zumindest zwei unterschiedliche Strömungspfade gebildet werden.

11. Halsbacke nach einem der Ansprüche 6 bis 10, **dadurch gekennzeichnet, dass** der Kühlkanal mehrere sich aneinander anschließende im wesentlichen gerade Abschnitte aufweist, wobei zwischen zwei Abschnitten Verbindungsstellen gebildet sind und wobei die Kanalachsen von je zwei sich aneinander anschließenden Abschnitten nicht kollinear zueinander angeordnet sind, wobei vorzugsweise die Kanalachsen von je zwei sich aneinander anschließenden Abschnitten einen Winkel zwischen 15 deg. und 155 , vorzugsweise zwischen 30 deg. und 100 deg. und besonders bevorzugt zwischen 40 deg. und 70 deg. Einschließen und/oder die Abschnitte gegenüber der Halsbackenachse geneigt angeordnet sind, wobei besonders bevorzugt zumindest jede zweite Verbindungsstelle zwischen sich aneinander anschließenden Abschnitte einen Verbindungsabschnitt des Kühlkanals bildet, dessen Kanalwand zumindest teilweise von dem Verschlusselement gebildet wird.

12. Halsbacke nach einem der Ansprüche 6 bis 11, **dadurch gekennzeichnet, dass** der Kühlkanal eine Mehrzahl von sich aneinander anschließenden Abschnitten aufweist, wobei jeder zweite der Mehrzahl von sich aneinander anschließenden Abschnitten ein Horizontalabschnitt ist, der im wesentlichen senkrecht zu der Halsbackenachse angeordnet ist, und immer ein Horizontalabschnitt über einen Vertikalabschnitt, der mit einem Winkel von weniger als 60 , vorzugsweise zwischen 30 deg. und 45 deg. und besonders bevorzugt zwischen 35 deg. und 40 deg. gegenüber der Halsbackenachse geneigt ist, mit einem weiteren Horizontalabschnitt verbunden ist, wobei vorzugsweise die Kanalwände zumindest jedes vierten Abschnitts, vorzugsweise jedes zweiten Abschnitts der Mehrzahl von sich aneinander anschließenden Abschnitten teilweise von dem Verschlusselement gebildet wird und/oder der Kühlkanal zumindest abschnittsweise alternierend Horizontalabschnitte und Vertikalabschnitte aufweist, die derart angeordnet sind, dass das Fluid vom im Kühlkanal zumindest abschnittsweise mäanderförmig geführt ist, und/oder der Kühlkanal genau zwei Horizontalabschnitte und mindestens zwei die Horizontalabschnitte verbindende Vertikalabschnitte aufweist, die derart angeordnet sind, dass das durch den Einlass in die Halsbacke eintretende Fluid durch den Einlasskanal zu dem ersten der Horizontalabschnitte, von diesem über die zumindest zwei Vertikalabschnitte zu dem zweiten Horizontalabschnitt und weiter zum Auslasskanal und zum Auslass geleitet wird.

13. Halsbacke nach einem der Ansprüche 6 bis 12, **dadurch gekennzeichnet, dass** der Grundkörper eine der formgebenden Oberfläche abgewandten Fläche, die konisch ausgebildet ist, aufweist, wobei die konische Fläche dafür vorgesehen ist, mit einem anderen Bauteil des Spritzgießwerkzeuges während des Spritzgießvorgangs in Kontakt zu treten, wobei vorzugsweise der Kühlkanal im wesentlichen in einem Bereich des Grundkörpers zwischen der formgebenden Oberfläche und der konischen Fläche der konischen Fläche angeordnet ist und/oder die konische Fläche von einem separaten Konusteil gebildet wird, das als Verschlusselement ausgebildet ist.

14. Spritzgießform zur Herstellung von Hohlkörperformlingen, **dadurch gekennzeichnet, dass** sie mindestens eine Halsbacke nach einem der Ansprüche 6 bis 13 aufweist.

15. Funkenerosionswerkzeug zur Durchführung des Verfahrens nach einem der Ansprüche 1 bis 5.
